# EUROPEAN PATENT SPECIFICATION

(11) **EP 1 217 527 B1**
(45) Date of publication and mention of the grant of the patent: **03.05.2006**
(21) Application number: 01130281.7
(22) Date of filing: 20.12.2001
(51) Int. Cl.: G06F 13/12

(54) **Terminal device and method of controlling transmission in the terminal device**
Terminalgerät und Verfahren zur Datenübertragungssteuerung im Terminalgerät
Dispositif terminal et procédé de commande de transfert dans le dispositif terminal

(30) Priority: 20.12.2000 JP 2000387319
(43) Date of publication of application: 26.06.2002
(73) Proprietor: SEIKO EPSON CORPORATION, Shinjuku-ku, Tokyo 163-0811 (JP)
(72) Inventor: Koike, Toshiaki, Suwa-shi, Nagano-ken 392-8502 (JP); Mochizuki, Hidetake, Suwa-shi, Nagano-ken 392-8502 (JP)
(74) Representative: Hoffmann, Eckart

(56) References cited:
- US-A- 5 802 546
- PATENT ABSTRACTS OF JAPAN vol. 010, no. 317 (E-449), 28 October 1986 (1986-10-28) & JP 61 125258 A (FUJITSU LTD), 12 June 1986 (1986-06-12)
- PATENT ABSTRACTS OF JAPAN vol. 009, no. 105 (P-354), 9 May 1985 (1985-05-09) & JP 59 229658 A (NIPPON DENKI KK), 24 December 1984 (1984-12-24)

## Description

The present invention relates generally to terminal devices such as printers, displays, and cash deposit devices as used in automated teller machines (ATM), cash dispensers, POS systems, and bank kiosks located in convenience stores, and relates more particularly to a transmission control device and transmission control method for sending data from such a terminal device to a host system.

ATMs, cash dispensers, POS terminals, bank kiosks, and other such systems typically have a main control device such as a personal computer (referred to below as a PC or host) and plural terminal devices, such as printers, display devices, storage devices, and bar code readers, connected to and controlled by the host. The host controls the overall operation of the various terminal devices in order to achieve the desired functionality of the respective system. More specifically, the host and the terminal devices are interconnected by a data communication line, enabling the host to send control commands and other data to the terminal devices to control the terminal devices. The terminal devices send data to the host according to the function of the respective terminal device, and, when requested by the host, send a status report to the host that indicates the operating status of the respective terminal device. Most of the terminal devices installed in such system are connected to the host through a serial port (such as RS-232C) for data exchange via said data communication line.

An interface device is provided at either end of each communication line, and a control line is provided for controlling communications. A terminal device, for example, can use a data terminal ready (DTR) signal to notify the host whether or not it is ready to receive data. When the DTR signal goes active (active state), the host sets the data set ready (DSR) signal active, and sends data after having thus confirmed that both sides are in an operating state. This makes it possible to prevent data from being dropped during data communication.

The present invention is applicable to all kinds of terminal device, but to simplify the following description it is described only with reference to a printer, a terminal device that is frequently used in ATMs, POS systems, and the like.

A printer cannot print if it has a shortage of any necessary printing supplies such as printing paper or ink. It is therefore possible for the host to check how much printing paper and ink remains. More specifically, the printer is configured to send ink near-end or paper near-end status data to the host if the remaining printing paper or ink supply becomes low, and to send an ink end or paper end status if the supply is completely depleted. Various other status data may be sent to the host in addition to the above mentioned ones, including printer cover open, ink tank removed, paper jam, and power supply error status data.

The printer may become unable to operate as a terminal (a state referred to below as being off-line) if, for example, a receive buffer of the printer becomes full (a receive buffer full status), a paper jam or another error occurs, or the printer cover is open. If the printer, that is, terminal device, goes off-line, it is necessary to notify the host of the off-line status and interrupt sending data from the host.

Data is sent to the host in response to a status request command from the host. There are different types of status request command. For example, the host may send a command to an individual terminal device to have the status information sent from that terminal device, or it may send a command enabling a so-called ASB (Automatic Status Back) function of the terminal device for sending status data automatically whenever there is a change in a particular status .

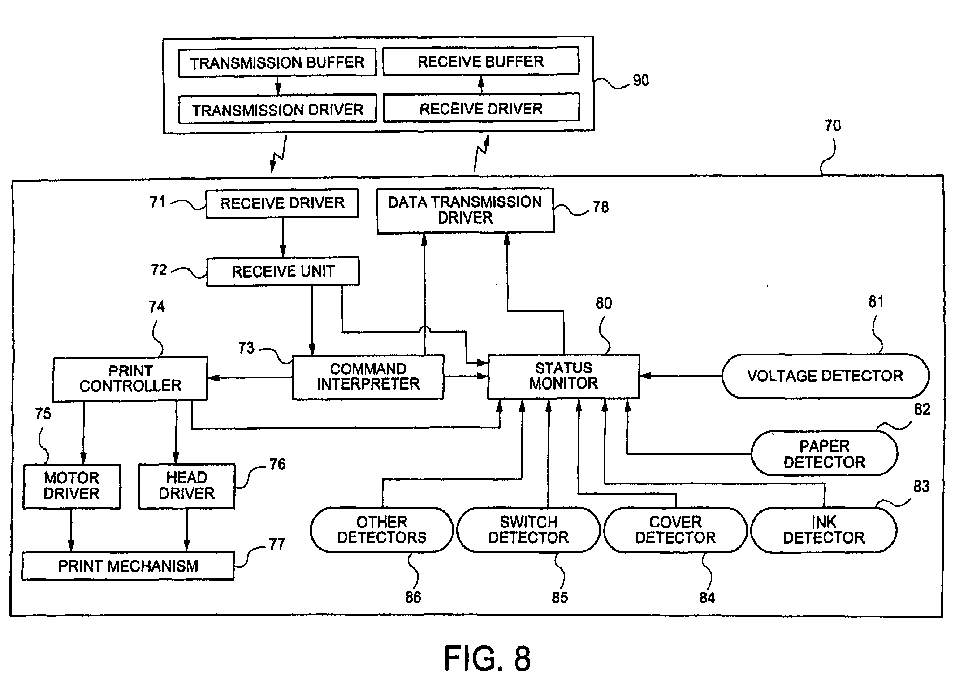

A data transmission control device according to the prior art is described in further detail below with reference to Fig. 8. Fig. 8 is a function block diagram of a printer 70 connected to a host 90 in a POS system. Fig. 8 shows only the major parts of printer 70. A personal computer with a general purpose operating system can be used for the host 90. The host 90 controls the overall POS system. Though not shown in Fig. 8, numerous terminal devices such as a display device and a cash drawer required to achieve the functions of a POS system are connected to the host 90 in addition to the printer 70, and the host controls these terminal devices by exchanging data with them.

The printer 70 is controlled by sending control commands and data from the host 90 to the printer 70. In order to control the printer 70, the host 90 can send a command instructing the printer 70 to report its condition (status). In response to the command from the host 90, the printer 70 then sends the requested status.

The host 90 and printer 70 are connected through serial communications port (RS-232C) drivers, for example. Printer control commands and other data sent from the host 90 are received through the receive driver 71 by the receive unit 72. Received data is stored in a receive buffer (not shown in the figure) in the receive unit 72. Data stored in the receive buffer is interpreted by the command interpreter 73 in the order it was stored in the receive buffer.

The command interpreter 73 interprets and executes the commands. For example, if a print command is received the command interpreter 73 prepares the print data in a print buffer (not shown in the figure), and the data is then printed by the head driver 76 and the print mechanism 77 under the control of the print controller 74. A motor driver 75 handles transporting the printing paper and moving the head carriage (both not shown in the figure).

A status monitor 80 is connected to a power supply voltage detector 81, a paper detector 82, an ink detector 83, a cover detector 84, a switch detector 85 for detecting paper jams, and other detectors 86, and monitors the internal condition of the printer 70. An abnormal supply voltage, the presence and amount of remaining printing paper, the presence and amount of remaining ink, whether the covers are open or closed, occurrence of any paper jams, carriage drive errors, receive buffer full, and other printer conditions are detected by detectors 81 to 86 and passed to the status monitor 80.

When a status request command is sent from the host 90, it is passed through the receive unit 72 and interpreted by the command interpreter 73, and status information is then sent from status monitor 80 through the data transmission driver 78 to the host 90.

When the ASB function is used, the status of the printer 70 is sent to the host 90 whenever the status changes. Hence, by first enabling the ASB function, the host 90 can be automatically informed of certain printer conditions (status), including errors, cover open status, paper position, and remaining ink quantity. The status data sent by the ASB function will be referred to as ASB data hereinafter.

The status data may be only one byte long or may comprise several bytes. If it is one byte, that is, 8 bits, eight types of status data can be communicated, and as the number of bytes increases the amount of status data that can be transmitted increases correspondingly. A case in which ASB data four bytes length is sent to the host 90 is supposed in this text although the length of the status data is not essential for the invention.

If the ASB function is enabled and there is a change in a specified status, the status monitor 80 assembles a particular status report (of four bytes in the assumed example) and sends it through data transmission driver 78 to the host 90 after it has been confirmed that the host 90 can receive data, i.e., the host is not busy.

Status data such as described above is sent to the host as communication data. Furthermore, because ASB data (status data sent by the ASB function) is sent automatically to the host whenever there is a change in status, status data may be sent quite frequently. The problem is that this could cause the transmission buffer of the terminal device to become full (resulting in a buffer full state), making it unable to store further information and possibly resulting in the loss of status data generated after the buffer becomes full. Such a system is described in US-A-5802546.

An object of the present invention is to provide a terminal device and transmission control method for it that enable transmission to the host without losing information important for the host and conveyed by status data generated continuously by the terminal device. Another object of the present invention is to provide a status data transmission control method whereby a smaller transmission buffer can be used and the communication load can be significantly reduced.

This object is achieved with a device as claimed in claim 1 and a method as claimed in 7. Preferred embodiments of the invention are subject-matter of the dependent claims.

By providing a dedicated buffer for storing continuously generated status data and storing at least the most recent status data and history data that reflect changes in the status data, and by sending to the host only the most recent status data and the history data of status changes leading thereto, the present invention provides a method that allows reducing the buffer needed for transmission and greatly reduce the communication load. As a result, a history of status changes can be reliably stored and transmitted using a small amount of data.

Status changes can be stored using a minimal amount of data when the transmission buffer becomes full, and the transmission load can therefore be lightened. Status data generated continuously by a terminal device can be sent to the host without loss of essential information. The status change history can also be sent reliably to the host without loss.

Other objects and attainments together with a fuller understanding of the invention will become apparent and appreciated by referring to the following description of preferred embodiments taken in conjunction with the accompanying drawings, in which:
- Fig. 1: is a function block diagram of a printer forming one example of a terminal device according to an embodiment of the present invention;
- Fig. 2: is a function block diagram showing an example of the basic configuration of the transmission unit of the printer in Fig. 1;
- Fig. 3: is a flow chart used to describe the operation of the transmission unit in Fig. 2;
- Fig. 4: is a flow chart of a process in branch A branching from step S100 in Fig. 3;
- Fig. 5: is a flow chart of the merge process;
- Fig. 6: is a function block diagram showing an example of the basic configuration of the merge processor and ASB buffer of the transmission unit in Fig. 2;
- Fig. 7: shows the changes in the last generated data (Tran), history data (Mid), and last stored data (New); and
- Fig. 8: is a function block diagram showing the major parts of a printer according to the prior art.

A preferred embodiment of the present invention is described below with reference to the accompanying figures. As noted above the present invention can be used with various types of terminal device, but is described in the preferred embodiment below with reference to a printer, a type of terminal device that is frequently used in ATM, POS, and kiosk terminal systems, sends to the host and receives from it a large amount of data, and also has numerous status types. The invention is even more particularly described below with reference to a printer used in a POS system.

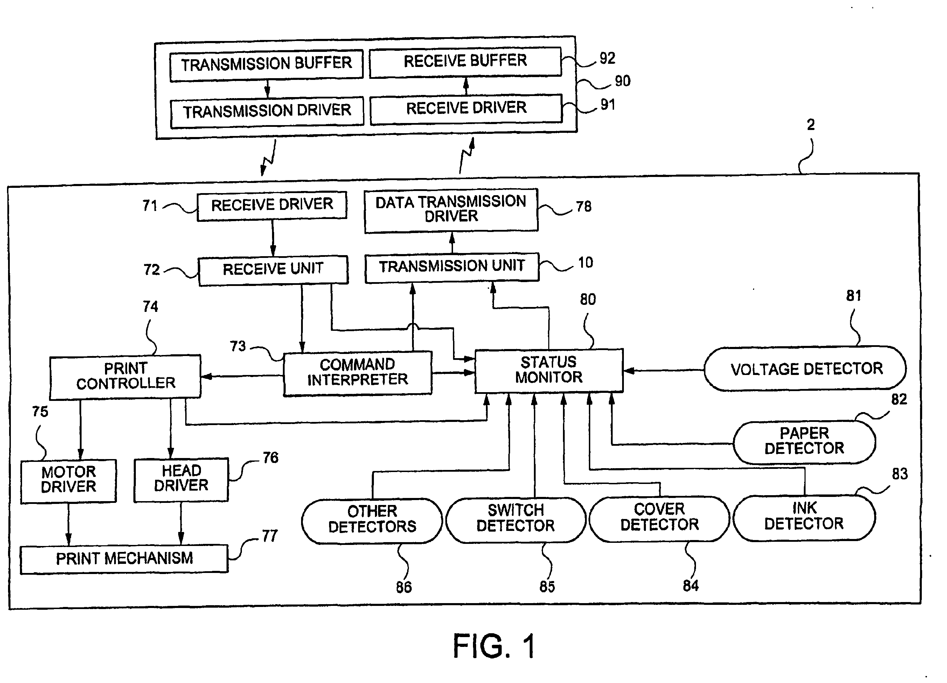

Fig. 1 is a function block diagram of a printer 2 according to a preferred embodiment of the invention. As in Fig. 8, only the major parts of the printer are shown. The configuration of the printer 2 differs from printer 70 in Fig. 8 in the addition of a transmission unit 10 for controlling the sending of data from the printer 2 to the host 90. Note that like parts in Fig. 8 and Fig. 1 are identified by like reference numerals, and further description thereof is omitted below.

When sending data from printer 2 to host 90, transmission unit 10 sends data in byte units after confirming that the host 90 can receive the data. If host 90 becomes busy while transmission is in progress, transmission is interrupted and resumed when host 90 is again able to receive data.

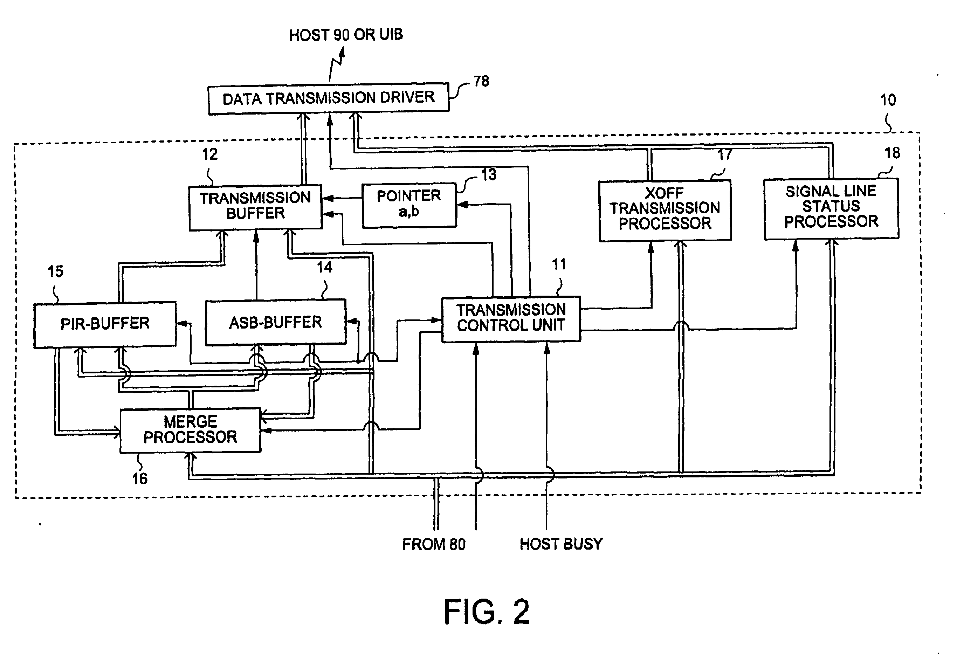

A preferred embodiment of a transmission unit 10 according to the present invention is described with reference to Fig. 2. The transmission unit 10 has a transmission control unit 11, a transmission buffer 12, and a pointer memory 13. When a control signal is sent to transmission control unit 11 and status data is simultaneously sent to transmission buffer 12 from status monitor 80, the transmission control unit 11 checks if the host 90 is busy and, if not, sends the status data stored in the transmission buffer 12.

The transmission unit 10 in this example also has an ASB-dedicated buffer 14, PIR-dedicated buffer 15, merge processor 16, XOFF transmission processor 17, and signal line status processor 18. The ASB data is temporarily stored to the ASB-dedicated buffer 14 if any transmission data other than ASB data is stored in the transmission buffer 12. ASB data in this embodiment is supposed to consist of 4 bytes.

PIR data is temporarily stored in the PIR buffer if any transmission data is stored in the transmission buffer 12. Note that PIR data is data that is sent according to the process ID optionally inserted by the host to control commands or print data and sent to the printer, and indicates that the control command or print data was processed by the printer. This enables the host to send data synchronized to the internal state of the printer 2.

In this embodiment the transmission control unit 11 controls sending specific transmission data such as the XOFF signal and signal line status with higher priority than other transmission data. The XOFF transmission processor 17 sends a disable receive signal (XOFF) from the printer 2 to the host with highest priority. The signal line status processor 18 sends signal line status data to the host 90 to report when the printer 2 has gone off-line, and therefore transmits to the host with the next-highest priority to XOFF. The XOFF signal and signal line status are sent directly through data transmission driver 78 to the host 90 without passing through the transmission buffer 12.

When the ASB buffer 14 or PIR buffer 15 is full, the merge processor 16 generates status-change history data (referred to below as simply history data) for storing any following most-recent status data and a history of status changes.

Receiving status data by the transmission unit 10 is described next below. When status data and a control signal are sent from the status monitor 80, the control signal is input to the transmission control unit 11 and the status data is temporarily stored in the transmission buffer 12, unless the transmission buffer holds transmission data other than ASB data already. The storage capacity of the transmission buffer 12 can be determined as necessary and in this example is set to 128 bytes.

Pointer memory 13 includes a read pointer 13a indicating the location of the next data to be sent to the host, and a write pointer 13b indicating the next storage location in the transmission buffer 12, if any. The write pointer 13b is incremented when transmission data including status data is written into the transmission buffer 12. Note that both pointers are controlled to move within the address range of the transmission buffer in the RAM in which the transmission buffer 12 is provided. That is, if a pointer is incremented to an address outside the highest address in the address range, it is reset to the lowest value in the address range. This type of buffer structure is known as a "ring buffer".

In the prior art, the next status data is stored in the transmission buffer 12 when storage space is available again after the transmission buffer became full. According to this invention, however, because of the nature of the ASB data and PIR data the amount of data to store could become very large if this data is frequently generated, dedicated buffers 14 and 15 are respectively provided to temporarily store this data before transferring it to the transmission buffer 12.

Under specific conditions, such as when dedicated buffer 14 or 15 becomes full (buffer full state), a merge process is applied by the merge processor 16 according to the properties of the data to be stored, such as generating a history of changes in the ASB or other status data, and temporarily storing this history of changes together with the most recently occurring status data to buffers 14 and 15, respectively. Details of the merge process are described further below.

### Transmission process for normal transmission data

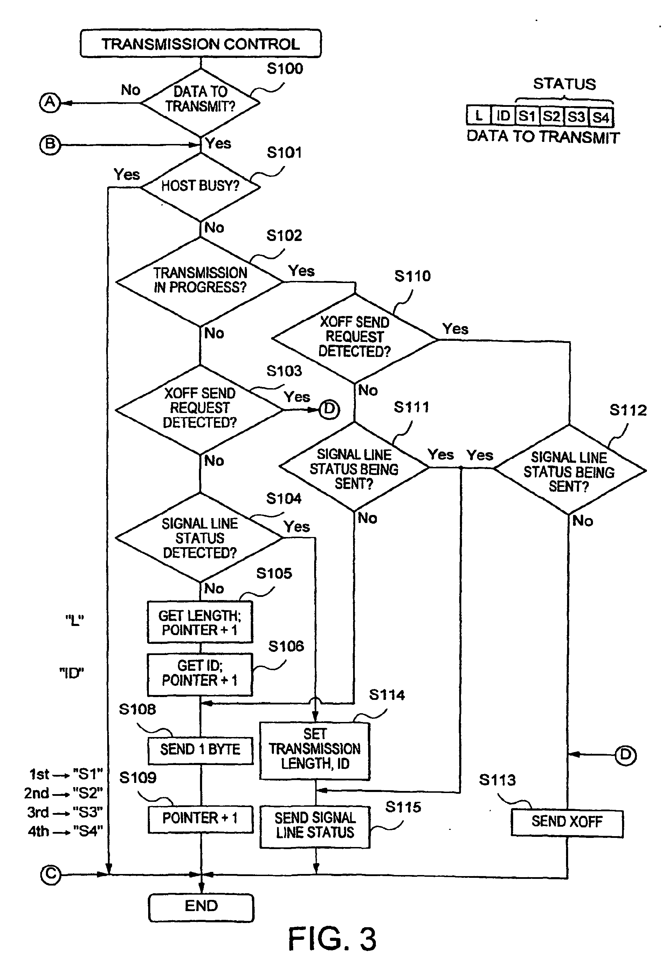

The transmission process of the transmission unit 10 is described first below using Fig. 2 and Fig. 3. Fig. 3 is a flow chart for describing the transmission control process of the transmission unit 10.

The transmission data L-ID-S1-S2-S3-S4 shown at the top right in Fig. 3 is an example of data stored in transmission buffer 12 where S1-S2-S3-S4 are data bytes, of status data for instance, to be sent to the host 90.

The transmission control unit 11 checks if data is stored in transmission buffer 12. This can be determined by comparing the above-noted write pointer 13b and read pointer 13a; if the values are the same, transmission buffer 12 is empty. If there is transmission data (S100; *Yes),* whether the host 90 is busy is checked (S101). If the host 90 is busy, the transmission process pauses until the host 90 can receive (S101; *Yes*). If the host 90 is not busy (S101; *No),* transmission control unit 11 checks if the printer 2 is sending data already (S102). Because here the transmission control unit 11 is attempting to start data transmission and is not in the midst of data transmission **(S102;** *No),* the procedure advances to the next step and the presence of an XOFF send request is checked (S103). If there is no XOFF send request, the presence of a signal line status is checked (S104), and if it is also not present (S104; *No)*, the first data, that is, the length L of the data to be sent, is read from transmission buffer 12 and pointer 13a is incremented (S105). Note that the data length L obtained here is stored in RAM and used as the starting value of a loop counter for the current send loop. ID is read next from the transmission buffer 12 to determine the type of transmission data (status type, for example) (S106). In step S108 the next data byte, S1, is read from transmission buffer 12 and sent to the host 90. The pointer 13a is then incremented to point to the next data byte S2, at which point sending 1 byte ends (S109). Note that the above-noted loop counter is decremented in this process.

The next 1 byte is then transmitted by the above process, that is, by repeating the main send loop. Whether there is any transmission data is first checked (S100). Because transmission data (S2 to S4) remains at this point, the procedure advances to the next step (S101) and whether the host is busy is checked (S101). If it is busy, the transmission process pauses until the host is ready (S101; *Yes*). If the host is not busy (S101; *No),* whether data is being sent is checked (S102). This can be determined based on whether or not the value of the above-noted loop counter is zero. If the loop counter is set to zero, then transmission is not in progress. Because, in the currently explained example, data is being sent (S102; *Yes),* the procedure branches to (S110, S111), and the presence of the XOFF signal and that of the signal line status are checked. If neither the XOFF signal nor the signal line status is detected (S110, *No*; S111, *No),* data byte S2 indicated by pointer 13a is read and sent to the host 90 (S108). When sending 1 byte ends the pointer 13a is incremented in preparation for sending the next data byte S3 (S109). A number of bytes equal to the number of data bytes indicated by the data length L can be sent by repeating the same process using the loop counter. Using the example of the above transmission data, data bytes S3 and S4 are sent to complete the transmission process for the transmission data sequence.

### XOFF signal and signal line status transmission process

Operation when status data is being sent and an XOFF signal send request or signal line status send request is issued is described next. As shown in Fig. 2, the XOFF signal and signal line status are not stored in transmission buffer 12, but are sent directly through data transmission driver 78 to the host by XOFF transmission processor 17 and signal line status processor 18, respectively. The transmission process for this takes priority over the transmission data in transmission buffer 12. This is described using the transmission control flow chart shown in Fig. 3.

If an XOFF send request is detected while preparing to send the first data byte S1 (S103; *Yes),* the procedure branches to D and the XOFF signal (1 byte) is sent with priority. If an XOFF signal send request is detected while sending the transmission data sequence S2 to S4 (S110; *Yes),* the XOFF signal is sent unless the signal line status is being sent (S112; *No).* The XOFF signal is thus sent to the host 90 with the highest priority except when the signal line status is being sent.

If a signal line status is detected (S104; *Yes*), the signal line status length (plural bytes can be defined) and ID are set (S114), and 1 byte of the signal line status is sent (S115). If there are plural signal line status bytes and the signal line status is being sent (S111 returns *Yes* or S112 returns *Yes)* after confirming that the host is not busy (S101), the remaining signal line status is sent sequentially one byte at a time (S115). As will be understood from this control process, the signal line status is sent with the next-highest priority to the XOFF signal.

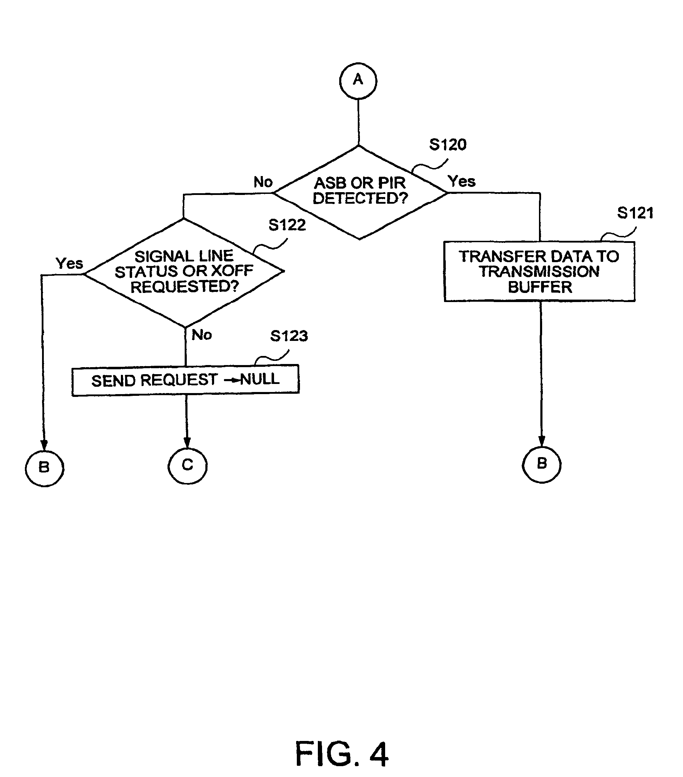

A case in which there is no transmission data in the transmission buffer 12 is described next. If there is no data in transmission buffer 12, the procedure branches to A from step S100 in Fig. 3. Fig. 4 is a flow chart of the process for branch A.

If there is no transmission data in the printer 2, whether ASB data or PIR data is in ASB buffer 14 or PIR buffer 15 is first checked (S120). If ASB data or PIR data is found, the data is sent to the transmission buffer 12 (S121), and the procedure branches to B in Fig. 3. As described above in Fig. 3, the status is sent after confirming that the host 90 is not busy (S101).

If ASB data or PIR data is not stored in buffer 14 or 15 (S120; *No),* whether there is a signal line status or XOFF signal send request is checked. If there is no send request (S122; *No),* the send request is set to null, control branches to C in Fig. 3, and the transmission process ends. If there is a send request (S122; *Yes*), control branches to B in Fig. 3 and the XOFF signal or signal line status send process is run.

### Merge process

The merge process is described in detail next. The merge process is executed when, with the configuration shown in Fig. 2, transmission data, other than ASB data in the transmission buffer 12, is already stored in ASB buffer 14 or PIR buffer 15, and further ASB data or PIR data is generated.

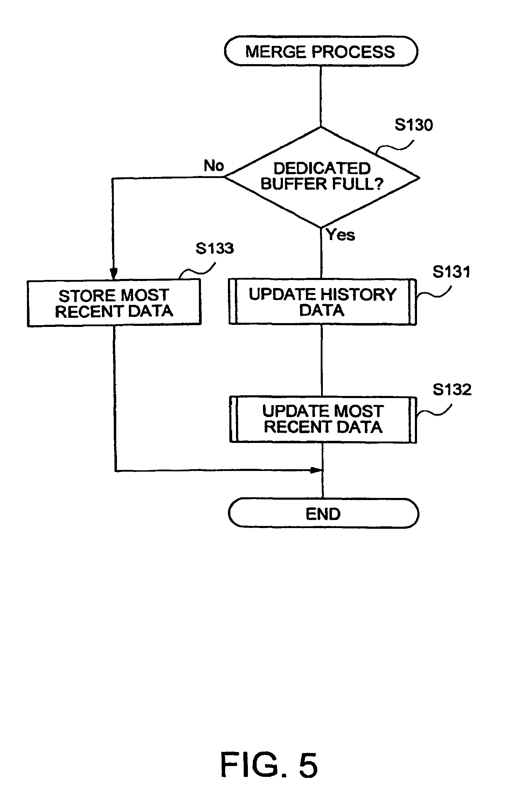

Fig. 5 is a flow chart of the merge process. First, if ASB data or PIR data is output from the status monitor 80, the merge processor 16 (Fig. 2) first determines if the merge process is necessary. For example, if there is no space in the corresponding dedicated buffer 14 or 15, a merge process is determined necessary (S130). If there is space in the buffer (S130; *No),* the latest (most recent) data from the status monitor 80 is stored in the corresponding buffer 14 or 15 (S133). In specific cases, such as when there is no space (S130; *Yes*), the history data stored in the buffer 14 or 15 is updated (S131), and the latest data is then stored in the corresponding buffer 14 or 15 (S132).

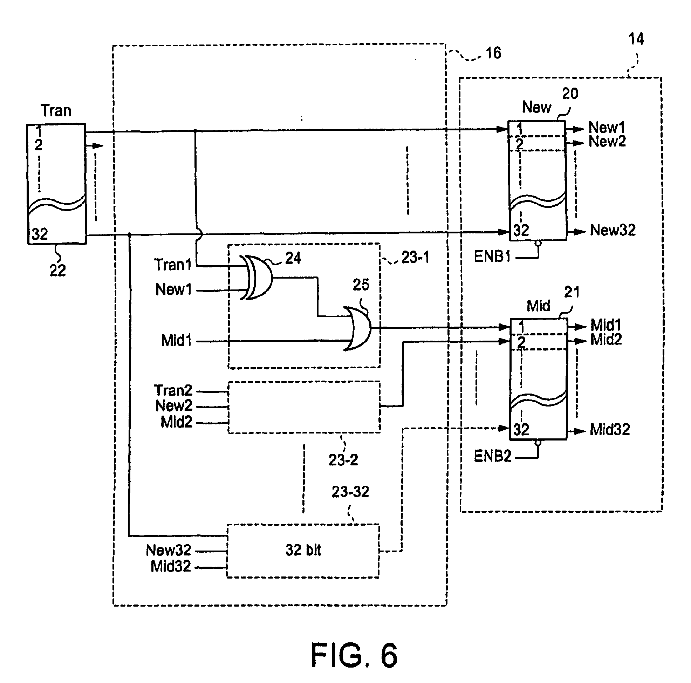

Updating the history data related to the ASB data is described next with reference to Fig. 6. Fig. 6 is a function block diagram for describing the basic configuration of the merge processor 16 and ASB buffer 14. The ASB buffer 14 comprises a 4-byte (32-bit) status data memory 20 and a 4-byte (32-bit) history data memory 21. It will be appreciated that the 4-byte capacity of memories 20 and 21 corresponds to the 4-byte status data length assumed for this example. So, this capacity would be different if the data length were different.

The "last generated ASB data" Tran is stored in memory 20 becoming the "last stored ASB data" New. As further described below, information indicative of whether there was a change in the plural ASB data sent sequentially to the merge processor, that is, the history data, is stored in memory 21.

If space is available in the transmission buffer 12, ASB data that is the exclusive OR of the history data and the data New is generated and transferred to the transmission buffer, and is followed by the data New. By obtaining the exclusive OR of the history data and the data New, a status (bit) that changed will be coded in the ASB data as the inverse of the corresponding bit in the data New, and any status (bit) that did not change will be the same as the corresponding bit in the data New. As a result, even if the ASB data last sent to the host and the status data New are the same and there have been intermediate status data that could not be sent to the host, the host can be notified of a status change if there was a change in status in between.

Because of the nature of ASB data the presence of a change in status is important but it is not necessary to know the process, that is, the sequence of changes. Furthermore, it is also most important to send the latest status to the host as soon as possible, and it is therefore desirable to reduce the amount of ASB data that must be sent as much as possible. The least amount of data required can therefore be obtained by storing for each status (bit) the most recent state and information indicative of whether there was a change in that status (bit).

For the reasons described below information indicative of whether there was a change in the ASB data is converted to ASB data generated by obtaining the exclusive OR of the history data and the status data New, and is then sent to the host in the present embodiment. More specifically, the history data is not ASB data and cannot be interpreted by the host as ASB data even when it is sent to the host. The host cannot determine if the data that is sent is "ASB data" or is "history data," and the host therefore cannot recreate the history of changes in the ASB data.

"Tran" in Fig. 6 is the last generated ASB data 22 transferred from status monitor 80, and consists (in the assumed example) of 4 bytes (i.e., 32 bits Tran1 to Tran32).

Fig. 6 is for describing an example of the merge function, and the timing and other control details are omitted. If there is space in the ASB buffer 14 when status data is sent from the status monitor 80, it is stored directly in memory 20 as described above. The initial value in memory 21 is zero, and history data in memory 21 is cleared to zero after data is sent to the transmission buffer 12.

For each bit in the ASB data the merge processor 16 has a respective state change detector 23-*x* (23-1 to 23-32, i.e., 1 *x* 32). Each detector 23-*x* has an exclusive OR gate 24 and an OR gate 25 configured to output a 1 if the bit Tran*x* differs from the bit New*x*. The output of exclusive OR gate 24 is input to OR gate 25, which then obtains the logical OR with the corresponding bit Mid*x* in the history data.

The output from OR gate 25 is therefore 1 if there is a change even once in the corresponding ASB data bit generated after the ASB data has been sent to the transmission buffer 12. Information indicating that there was a change is thus stored in memory 21. Output from OR gate 25 is input to the corresponding bit in the history data memory, and the data in memory 21 is updated at the ENB2 timing. A change in ASB is therefore reflected in the bits of the history data in memory 21.

After the history data in memory 21 is updated by applying ENB2, ENB1 goes active, and the status data Tran1 to Tran32 is stored in memory 20 overwriting the existing status data. . The latest ASB data and change history is stored in ASB buffer 14, and when space becomes available in the transmission buffer 12, the exclusive OR of the ASB data New and history data Mid, and then the ASB data New, are sequentially transferred as described above.

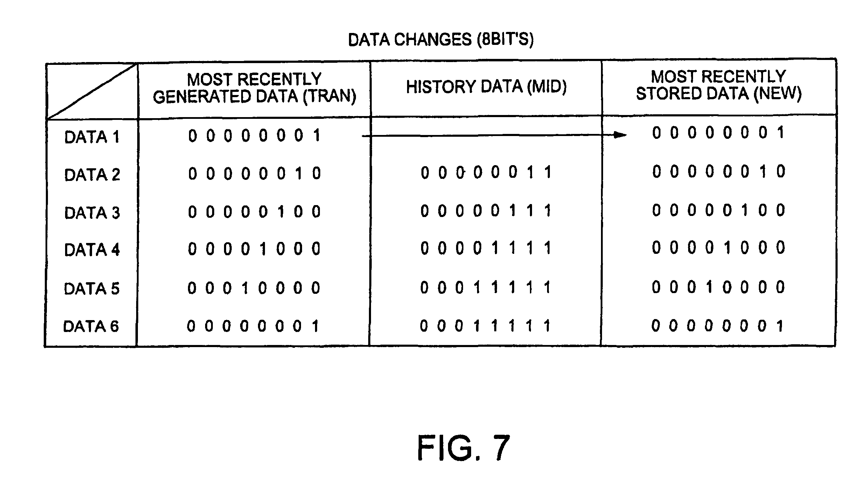

Using an example, these data changes are described in more detail below with reference to Fig. 7. Fig. 7 shows the changes in the last generated status data (Tran), the history data (Mid), and the last stored status data (New). To simplify the description Fig. 7 shows only part (1 byte = 8 bits) of the ASB data.

It is assumed that status data Tran (Data 1) is transferred under circumstances in which it cannot be stored in the transmission buffer 12 because the transmission buffer 12 holds transmission data already. Because the ASB buffer 14 does not require a merge process at this time, Data 1 is stored directly in memory 20, and the merge process ends (S130 and S133 in Fig. 5).

If next status data Tran (Data 2) is then received, the merge process is started (S130 in Fig. 5 reveals *Yes*) and the history data in memory 21 is updated. In this case bit 1 (Mid1) in the history data becomes 1 because New1, that is, bit 1 in the last stored data, is 1, and bit 1 (Tran1) in the last generated Data 2 is 0; Mid2 in the history data also becomes 1 because New2 (which was 0) changed to 1 (Tran2) (S131, Fig. 5). Data 2 (Tran) is then stored as the last stored data New in memory 20 overwriting Data 1 (S132, Fig. 5).

When Data 3 is then sent from status monitor 80, bit 3 (Mid3) in the history data likewise changes to 1 and bits 1 and 2 (Mid1, Mid2) remain set to 1. Data 3 is then stored directly as last stored data New overwriting Data 2.

When Data 4 and Data 5 are then received in sequence, bits 4 and 5 (Mid4, Mid5) of the history data change in sequence to 1, and the status data Tran (Data 5) is stored as the last stored data New.

When Data 6 is received bit 1 is changed from 0 (New1) to 1 (Tran1) and bit 5 is changed from 1 (New5) to 0 (Tran5), but the corresponding bits (Mid1, Mid5) in the history data are already set to 1 and the history data is therefore not changed.

If transfer to the transmission buffer 12 becomes possible at this point, the exclusive OR [[00011110]] of the last stored status data New [00000001] and the history data Mid [00011111] is obtained, and this logical OR is first transferred to the transmission buffer 12. The last stored status data New is then sent to the transmission buffer 12.

Furthermore, the PIR data is data enabling the host to determine the progress of a particular process and an intermediate history thereof is therefore not necessary. PIR data in the PIR buffer 15 that has not been sent can therefore be overwritten with the most recent PIR data.

It should be noted that the above preferred embodiment has been described with reference only to sending data from a printer as one example of a terminal device to a host, but if an independently operating interface means is provided in the terminal device, data communication with the interface means may be handled in the same way as communication with the host. In other words, the present invention is also applicable to transmission control for sending data in 1-byte units to an interface means in a terminal device.

In the embodiment explained above, ASB data is temporarily stored in the respective dedicated buffer when, at the time this data is generated, the transmission buffer holds transmission data, other than ASB data already. As an alternative, ASB data could be stored in the respective dedicated buffer only when, at the time this data is generated, the transmission buffer is full, i.e., cannot accommodate this newly generated data.

As described above, by providing a dedicated buffer for continuously generated status data and storing a history of status changes with a configuration whereby only the most recent status data and the status change history data are sent to the host, the present invention is able to reduce the buffer needed for transmission and greatly reduce the communication load.

## Claims

1. A terminal device adapted to be connected to a host and having an auto status back function to automatically generate status data in response to a status change and send status **characterized by** data to the host,
means for generating change data that defines changes between currently generated status data and the status data that were last sent to the host;
wherein said change data is transmitted to the host when said currently generated status data is transmitted.

2. The device of claim 1, further comprising:
a first memory for storing first status data previously transmitted to said host;
a second memory for storing currently generated status data as second status data;
a calculation unit for generating said change data indicating the difference between said first and said second status data; and
a transmission control device for transmitting said second status data and said change data to said host.

3. The device of claim 1 or 2, comprising:
a first buffer (12) for temporarily storing successively generated sets of status data, the first buffer (12) being either in a first or in a second state and being capable of receiving status data for storage only in the first state, which includes the state of the first buffer (12) being full;
means for transmitting data from said first buffer (12) to said host (90);
a dedicated second buffer (14) for temporarily storing one set of status data and history data;
a history data generating unit (16) for generating said history data so as to indicate the presence of a change in status among the plural sets of status data received successively by the second buffer (14, 15); and
control means (11) for
- storing in said second buffer (14), when the first buffer (12) is in said second state, each of said successive sets of status data together with corresponding history data, wherein each set being stored overwrites the previously stored set, and
- transferring information stored in the second buffer (14) to the first buffer (12), when the first buffer (12) enters said first state, said information comprising the set of status data and a modified set of status data obtained from a combination of said set of status data and said history data.

4. The device of claim 3, wherein only predetermined types of status data among said continuously generated status data is stored in the second buffer (14) subjected to history data generation by the history data generating unit (16).

5. The device of claim 3 or 4, wherein:
a set of status data is composed of a plurality of bits each representing one of a corresponding plurality of different status of said terminal device; and
the history data generating unit (16) is adapted to generate the history data by sequentially calculating the bitwise logical OR of each pair of immediately successive ones of the continuously received sets of status data.

6. The device of claim 5, wherein said combination is a bitwise exclusive OR said set of status data and said history data.

7. A method of controlling data transmission in a terminal device adapted to be connected to a host (90) and having an auto status back function to automatically generate status data in response to a status change and send status data to the host (90), **characterized by** the steps of:
generating change data defining satus changes between earlier status data previously sent to the host (90) and current status data generated by said auto status back function; and
transmitting said change data when said current status data is transmitted to said host (90).

8. The method of claim 7 applied to a terminal device having a first buffer (12) and a second buffer (14), comprising the following steps:
(a) receiving successively generated sets of status data;
(b) checking, in response to each set, if the first buffer (12) is in a first or a second state, the first state, including the state of the first buffer (12) being full;
(c) storing, in response to step (b) detecting that the first buffer (12) is in the first state, the respective set of status data in the first buffer (12);
(d) transmitting data stored in the first buffer (12) to said host (90);
(e) storing, if step (b) detects the first buffer (12) is in the second state, said respective set of status data in the second buffer (14), each set being stored in the second buffer (14) overwriting the previously stored set, if any;
(f) generating, each time a set of status data in the second buffer (14) is overwritten by a following one, history data indicating the presence of a change in successive sets of status data, and storing the history data in the second buffer (14); and
(g) transferring information stored in the second buffer (14) to the first buffer (12), when the first buffer (12) is detected to have re-entered said first state, said information comprising the set of status data and a modified set of status data obtained from a combination of said set of status data and said history data.

9. The method of claim 8, wherein the status data processed in step (e), step (f), and step (g) consists of specific predetermined status data types.

10. The method of claim 8 or 9, wherein the sets of status data processed in step (e), step (f), and step (g) are each composed of a plurality of bits each representing one of a corresponding plurality of different status of said terminal device; and step (f) comprises generating the history data by sequentially calculating the bitwise logical OR of each pair of immediately successive ones of the continuously received sets of status data.

11. The method of claim 10, wherein said combination is a bitwise exclusive OR said set of status data and said history data.

12. A data storage medium readable by a machine, the medium carrying a program of instructions executable by the machine to perform the transmission control method defined in any one of claims 7 to 11.

13. A data storage medium as described in claim 12, wherein the data storage medium records the computer program to Compact Disc, floppy disk, hard disk, or magnetic tape.

14. A computer program product comprising a data set and a set of commands executable by a machine to perform the transmission control method defined in any one of claims 7 to 11.

## Patentansprüche

1. Terminalgerät, das ausgebildet ist, um mit einem Host-Computer verbunden zu werden, und das eine automatische Statusreportfunktion aufweist, um automatisch Statusdaten reagierend auf eine Statusänderung zu erzeugen und Statusdaten an den Host-Computer zu senden, **gekennzeichnet durch**
eine Einrichtung zur Erzeugung von Änderungsdaten, die Änderungen zwischen aktuell erzeugten Statusdaten und den Statusdaten definieren, welche zuletzt an den Host-Computer gesendet wurden;
wobei die Änderungsdaten an den Host-Computer übertragen werden, wenn die aktuell erzeugten Statusdaten übertragen werden.

2. Gerät nach Anspruch 1, welches weiter aufweist:
einen ersten Speicher zum Speichern von ersten Statusdaten, die zuvor an den Host-Computer übertragen wurden;
einen zweiten Speicher zum Speichern von aktuell erzeugten Statusdaten als zweite Statusdaten;
eine Berechnungseinheit zum Erzeugen der Änderungsdaten, die den Unterschied zwischen den ersten und den zweiten Statusdaten angeben; und
eine Übertragungssteuervorrichtung zum Übertragen der zweiten Statusdaten und der Änderungsdaten an den Host-Computer.

3. Gerät nach Anspruch 1 oder 2, aufweisend:
einen ersten Puffer (12) zum vorübergehenden Speichern aufeinander folgend erzeugter Sätze von Statusdaten, wobei sich der erste Puffer (12) entweder in einem ersten oder einem zweiten Zustand befindet und nur im ersten Zustand zum Empfang von Statusdaten zur Speicherung in der Lage ist, wobei dieser erste Zustand den Zustand beinhaltet, dass der erste Puffer (12) voll ist;
eine Einrichtung zum Übertragen von Daten vom ersten Puffer (12) an den Host-Computer (90);
einen dedizierten zweiten Puffer (14) zum vorübergehenden Speichern eines einzigen Satzes von Statusdaten und Chronikdaten;
eine Chronikdaten-Erzeugungseinheit (16) zum Erzeugen der Chronikdaten, so dass das Vorliegen einer Änderung des Status bei den mehreren Sätzen von Statusdaten, die aufeinander folgend vom zweiten Puffer (14, 15) empfangen werden, angegeben wird; und
eine Steuereinrichtung (11) zum
- Speichern im zweiten Puffer (14), wenn sich der erste Puffer (12) im zweiten Zustand befindet, jedes der aufeinander folgenden Sätze von Statusdaten gemeinsam mit den entsprechenden Chronikdaten, wobei beim Speichern eines jeden Satzes der zuvor gespeicherte Satz überschrieben wird, und
- Übertragen von im zweiten Puffer (14) gespeicherten Informationen an den ersten Puffer (12), wenn der erste Puffer (12) in den ersten Zustand eintritt, wobei die Informationen den Satz von Statusdaten und einen modifizierten Satz von Statusdaten enthalten, der aus einer Kombination aus dem Satz von Statusdaten und den Chronikdaten erhalten wurde.

4. Gerät nach Anspruch 3, bei dem lediglich vorbestimmte Typen von Statusdaten aus den kontinuierlich erzeugten Statusdaten im zweiten Puffer (14) gespeichert werden und einer Chronikdatenerzeugung durch die Chronikdaten-Erzeugungseinheit (16) unterliegen.

5. Gerät nach Anspruch 3 oder 4, bei dem:
ein Satz von Statusdaten aus einer Mehrzahl von Bits besteht, die jeweils einen von einer entsprechenden Mehrzahl unterschiedlicher Stati des Terminalgerätes repräsentieren; und
die Chronikdaten-Erzeugungseinheit (16) ausgebildet ist, um die Chronikdaten **dadurch** zu erzeugen, dass ein bitweises logisches ODER aus jedem Paar von unmittelbar aufeinander folgenden der kontinuierlich empfangenen Sätze von Statusdaten berechnet wird.

6. Gerät nach Anspruch 5, bei dem die Kombination ein bitweises exklusives ODER des Satzes der Statusdaten und der Chronikdaten ist.

7. Verfahren zum Steuern einer Datenübertragung in einem Terminalgerät, das ausgebildet ist, um mit einem Host-Computer (90) verbunden zu werden, und das eine automatische Statusreportfunktion aufweist, um automatisch Statusdaten reagierend auf eine Statusänderung zu erzeugen und Statusdaten an den Host-Computer (90) zu senden, **gekennzeichnet durch** folgende Schritte:
Erzeugen von Änderungsdaten, die Statusänderungen zwischen früheren Statusdaten, die vorher an den Host-Computer (90) gesendet wurden, und aktuellen Statusdaten definieren, die durch die automatische Statusreportfunktion erzeugt wurden; und
Übertragen der Statusdaten, wenn die aktuellen Statusdaten an den Host-Computer (90) übertragen werden.

8. Verfahren nach Anspruch 7, angewandt auf ein Terminalgerät, das einen ersten Puffer (12) und einen zweiten Puffer (14) aufweist, wobei das Verfahren folgende Schritte umfasst:
(a) Empfangen aufeinander folgend erzeugter Sätze von Statusdaten;
(b) Überprüfen, reagierend auf jeden Satz, ob sich der erste Puffer (12) in einem ersten oder einem zweiten Zustand befindet, wobei der erste Zustand den Zustand beinhaltet, dass der erste Puffer (12) voll ist;
(c) Speichern, reagierend darauf, das im Schritt (b) festgestellt wird, dass sich der erste Puffer (12) im ersten Zustand befindet, des jeweiligen Satzes von Statusdaten im ersten Puffer (12);
(d) Übertragen von im ersten Puffer (12) gespeicherten Daten an den Host-Computer (90);
(e) Speichern, falls im Schritt (b) festgestellt wird, dass der erste Puffer (12) sich im zweiten Zustand befindet, des jeweiligen Satzes von Statusdaten im zweiten Puffer (14), wobei jeder Satz im zweiten Puffer (14) unter Überschreiben des zuvor gespeicherten Satzes, sofern vorhanden, gespeichert wird.
(f) Erzeugen, jedesmal wenn ein Satz von Statusdaten im zweiten Puffer (14) durch einen folgenden Satz überschrieben wird, von Chronikdaten, welche das Vorliegen einer Änderung in aufeinander folgenden Sätzen von Statusdaten angeben, und Speichern der Chronikdaten im zweiten Puffer (14); und
(g) Übertragen von im zweiten Puffer (14) gespeicherten Informationen an den ersten Puffer (12), wenn festgestellt wird, dass der erste Puffer (12) wieder in den ersten Zustand eingetreten ist, wobei die Informationen den Satz von Statusdaten und einen modifizierten Satz von Statusdaten beinhalten, der aus einer Kombination des Satzes von Statusdaten und der Chronikdaten erhalten wird.

9. Verfahren nach Anspruch 8, bei dem die Statusdaten, die in Schritt (e), Schritt (f), und Schritt (g) verarbeitet werden, aus speziellen vorbestimmten Statusdatentypen bestehen.

10. Verfahren nach Anspruch 8 oder 9, bei dem die Sätze von Statusdaten, die in Schritt (e), Schritt (f) und Schritt (g) verarbeitet werden, jeweils aus einer Mehrzahl von Bits bestehen, die jeweils einen von einer entsprechenden Mehrzahl unterschiedlicher Stati des Terminalgerätes repräsentieren; und Schritt (f) das Erzeugen der Chronikdaten beinhaltet, und zwar durch sequentielles Berechnen des bitweisen logischen ODER aus jedem Paar von unmittelbar aufeinander folgenden Sätzen der kontinuierlich empfangenen Sätze von Statusdaten.

11. Verfahren nach Anspruch 10, bei dem die Kombination ein bitweises exklusives ODER des Satzes der Statusdaten und der Chronikdaten ist.

12. Maschinenlesbares Datenspeichermedium, wobei auf dem Medium ein Programm aus Anweisungen gespeichert ist, die von der Maschine ausführbar sind, um das in einem der Ansprüche 7 bis 11 definierte Übertragungssteuerverfahren durchzuführen.

13. Datenspeichermedium nach Anspruch 12, bei dem das Datenspeichermedium das Computerprogramm auf eine CD, eine Diskette, eine Festplatte oder ein Magnetband enthält.

14. Computerprogrammprodukt, das einen Datensatz und einen Satz aus Befehlen aufweist, die von einer Maschine ausführbar sind, um das in einem der Ansprüche 7 bis 11 definierte Übertragungssteuerverfahren durchzuführen.

## Revendications

1. Dispositif terminal conçu pour être connecté à un hôte et ayant une fonction de retour automatique d'état pour engendrer automatiquement des données d'état, en réponse à un changement d'état, et pour envoyer des données d'état à l'hôte, **caractérisé par** :
un moyen destiné à engendrer des données de changements qui définissent des changements entre des données d'états actuellement engendrées et les données d'états qui ont été envoyées à l'hôte en dernier lieu ;
dans lequel les données d'états sont émises à l'hôte, lorsque les données d'états actuellement engendrées sont émises.

2. Dispositif suivant la revendication 1 comprenant en outre :
une première mémoire pour mémoriser des premières données d'états précédemment émises vers l'hôte ;
une deuxième mémoire pour mémoriser des données d'états actuellement engendrées, en tant que deuxièmes données d'états ;
une unité de calcul pour engendrer les données de changements indiquant la différence entre les premières et les deuxièmes données d'états ; et
un dispositif de commande d'émission pour émettre les deuxièmes données d'états et les données de changements vers l'hôte.

3. Dispositif suivant la revendication 1 ou 2, comprenant :
une première mémoire (12) tampon pour mémoriser temporairement des ensembles engendrés successivement de données d'états, la première mémoire (12) tampon étant soit dans un premier soit dans un deuxième état et pouvant recevoir des données d'états à mémoriser, seulement dans le premier état qui comprend l'état de la première mémoire (12) tampon étant pleine ;
un moyen destiné à émettre des données de la première mémoire (12) tampon à l'hôte (90) ;
une deuxième mémoire (14) tampon spécialisée pour mémoriser temporairement un ensemble de données d'états et des données d'historique ;
une unité (16) de génération de données d'historique pour engendrer les données d'historique, de manière à indiquer la présence d'un changement d'état parmi la pluralité d'ensembles de données d'états, reçus successivement par la deuxième mémoire (14, 15) tampon ; et
un moyen (11) de commande destiné à :
mémoriser dans la deuxième mémoire (14) tampon, lorsque la première mémoire (12) tampon est dans le deuxième état, chacun des ensembles successifs de données d'états conjointement à des données d'historique correspondantes, chaque ensemble en cours de mémorisation écrasant l'ensemble précédemment mémorisé, et
transférer les informations mémorisées dans la deuxième mémoire (14) tampon à la première mémoire (12) tampon, lorsque la première mémoire (12) tampon entre dans le premier état, les informations comprenant l'ensemble de données d'états et un ensemble modifié de données d'états, obtenu à partir d'une combinaison de l'ensemble de données d'états et des données d'historique.

4. Dispositif suivant la revendication 3, dans lequel seuls des types déterminés à l'avance de données d'états parmi les données d'états engendrées en continu, sont mémorisés dans la deuxième mémoire (14) tampon, soumise à la génération de données d'historique par l'unité (16) de génération de données d'historique.

5. Dispositif suivant la revendication 3 ou 4, dans lequel :
un ensemble de données d'états se compose d'une pluralité de bits représentant chacun un état parmi une pluralité correspondante d'états différents du dispositif terminal ; et
l'unité (16) de génération de données d'historique est conçue pour engendrer les données d'historique en calculant de façon séquentielle le OU logique au niveau du bit de chaque paire de ceux immédiatement consécutifs des ensembles de données d'états reçus en continu.

6. Dispositif suivant la revendication 5, dans lequel la combinaison est un OU exclusif au niveau du bit de l'ensemble de données d'états et des données d'historique.

7. Procédé pour commander l'émission de données, dans un dispositif terminal conçu pour être connecté à un hôte (90) et ayant une fonction de retour automatique d'état pour engendrer automatiquement des données d'état, en réponse à un changement d'état, et pour envoyer des données d'état à l'hôte (90), **caractérisé par** les étapes consistant à :
engendrer des données de changements définissant des changements d'états entre des données d'états antérieures précédemment envoyées à l'hôte (90) et des données d'états actuelles engendrées par la fonction de retour automatique d'état ; et
émettre les données de changements, lorsque les données d'état actuelles sont émises vers l'hôte (90).

8. Procédé suivant la revendication 8, appliqué à un dispositif terminal ayant une première mémoire (12) tampon et une deuxième mémoire (14) tampon, comprenant les étapes suivantes consistant à :
(a) recevoir des ensembles engendrés successivement de données d'états ;
(b) vérifier, en réponse à chaque ensemble, si la première mémoire (12) tampon est dans un premier ou dans un deuxième état, le premier état comprenant l'état de la première mémoire (12) tampon étant pleine ;
(c) mémoriser, en réponse à l'étape (b) détectant que la première mémoire (12) tampon est dans le premier état, l'ensemble respectif de données d'états, dans la première mémoire (12) tampon ;
(d) émettre des données mémorisées dans la première mémoire (12) tampon vers l'hôte (90) ;
(e) mémoriser, si l'étape (b) détecte que la première mémoire (12) tampon est dans le deuxième état, l'ensemble respectif de données d'états dans la deuxième mémoire (14) tampon, chaque ensemble en cours de mémorisation dans la deuxième mémoire (14) tampon écrasant l'ensemble mémorisé précédemment, s'il existe ;
(f) engendrer, à chaque fois qu'un ensemble de données d'états dans la deuxième mémoire (14) tampon est écrasé par un ensemble suivant, des données d'historique indiquant la présence d'un changement dans des ensembles successifs de données d'états, et mémoriser les données d'historique dans la deuxième mémoire (14) tampon ; et
(g) transférer les informations mémorisées dans la deuxième mémoire (14) tampon à la première mémoire (12) tampon, lorsqu'il est détecté que la première mémoire (12) tampon est repassée sous le premier état, les informations comprenant l'ensemble de données d'états et un ensemble modifié de données d'états, obtenu à partir d'une combinaison de l'ensemble de données d'états et des données d'historique.

9. Procédé suivant la revendication 8, dans lequel les données d'états traitées à l'étape (e), à l'étape (f) et à l'étape (g), se composent de types de données d'états déterminés à l'avance spécifiques.

10. Procédé suivant la revendication 8 ou 9, dans lequel les ensembles de données d'états traités à l'étape (e), à l'étape (f) et à l'étape (g) se composent chacun d'une pluralité de bits représentant chacun un état parmi une pluralité correspondante d'états différents du dispositif terminal ; et l'étape (f) comprend le fait d'engendrer les données d'historique en calculant de façon séquentielle le OU logique au niveau du bit de chaque paire de ceux immédiatement consécutifs des ensembles reçus en continu de données d'états.

11. Procédé suivant la revendication 10, dans lequel la combinaison est un OU exclusif au niveau du bit de l'ensemble de données d'états et des données d'historique.

12. Support d'enregistrement de données pouvant être lu par un ordinateur, le support comportant un programme d'instructions pouvant être exécuté par l'ordinateur, pour réaliser le procédé de commande d'émission, défini dans l'une quelconque des revendications 7 à 11.

13. Support d'enregistrement de données, suivant la revendication 12, le support d'enregistrement de données enregistrant le programme informatique sur un disque compact, une disquette, un disque dur ou une bande magnétique.

14. Produit-programme informatique comprenant un ensemble de données et un ensemble d'instructions pouvant être exécutées par un ordinateur, pour réaliser le procédé de commande d'émission, défini dans l'une quelconque des revendications 7 à 11.
